# NEUE EUROPÄISCHE PATENTSCHRIFT

(11) **EP 0 563 508 B2**
(45) Veröffentlichungstag und Bekanntmachung des Hinweises auf die Entscheidung über den Einspruch: **22.08.2001**
(45) Hinweis auf die Patenterteilung: 27.12.1995
(21) Anmeldenummer: 92890079.4
(22) Anmeldetag: 02.04.1992
(51) Int. Cl.: C02F 3/20, B01F 3/04

(54) **Einrichtung zum feinblasigen Belüften von Abwasser**
Apparatus for fine-bubble aeration of waste water
Dispositif pour l'aération à fines bulles d'eau usée

(43) Veröffentlichungstag der Anmeldung: 06.10.1993
(73) Patentinhaber: Klima, Hans-Horst, A-1070 Wien (AT)
(72) Erfinder: Klima, Hans-Horst, A-1070 Wien (AT)
(74) Vertreter: Rippel, Andreas, Dipl.-Ing.

(56) Entgegenhaltungen:
- EP-A- 0 359 698
- EP-A- 0 385 965
- AT-A- 391 127
- DE-C- 2 942 607

## Beschreibung

Die Erfindung bezieht sich auf eine Einrichtung zum feinblasigen Belüften von Abwasser mittels unter dem Wasserspiegel angeordneter, an einer Luftverteilerleitung angeschlossener Luftverteiler, die eine gelochte Luftverteiler-Folie aufweisen, die an ihren Randbereichen mit einem Formkörper dichtend verbunden ist, wobei der Formkörpeer einen rechteckigen Grundriß und gerundete Längskanten aufweist und die Luftverteiler-Folie um den Formkörper herum gespannt sowie an der Unterseite mittels Klemmteilen mit dem Formkörper verbunden ist, ferner zur weiteren Befestigung und Abdichtung der Luftverteiler-Folie Spannbänder um den Formkörper gelegt sind. Gegenstand der Erfindung ist ferner ein Verfahren zur Herstellung einer erfindungsgemäßen Einrichtung.

Bei der biologischen Reinigung von Abwasser nach dem Belebtschlamm-Verfahren hängt der Reinigungseffekt in hohem Maße von einer feinblasigen und gleichmäßigen Belüftung ab, damit möglichst viel Sauerstoff in das Wasser abgegeben werden kann und dieses den Sauerstoff auch aufnehmen kann.

Eine die geforderte feinblasige und gleichmäßige Belüftung ermöglichende Einrichtung der oben genannten Art ist in der AT-PS 391127 beschrieben.

In der EP-A1-0 359 698 ist eine Einrichtung zum feinblasigen Belüften von Abwasser beschrieben, bei der die Luftverteiler-Folie durch seitliche Klemmteile an einem plattenartigen Grundelement befestigt ist, wobei keine Spannbänder angeordnet sind.Eine Verstärkung der Oberseite mit der Luftverteiler-Folie erfolgt mittels aufgeschraubter Winkel.

Die Erfindung hat es sich zum Ziel gesetzt, die in der erstgenannten Veröffentlichung beschriebene Einrichtung weiter zu verbessern, insbesondere zu erreichen, daß die Oberseite des Formkörpers mit der Luftverteiler-Folie verstärkt wird, ohne daß jedoch Schrauben verwendet werden müssen. Schrauben bzw. Schraublöcher können nämlich sehr oft Undichtheiten hervorrufen. Das der Erfindung zugrundeliegende Ziel wird dadurch erreicht, daß die Spannbänder über die Länge des Formkörpers verteilt angeordnet und an der Oberseite des Formkörpers durch sich quer zum Formkörper erstrekkende Niederhalter verstärkt sind.

Bei einer besonders zweckmäßigen einfachen Ausführungsform der Erfindung sind die Niederhalter als Rohre ausgebildet, durch die die Spannbänder gesteckt sind.

Nach einem weiteren Merkmal der Erfindung besteht der Formkörper aus einer an ihren Rändern abgekanteten Blechplatte, vorzugsweise aus Edelstahl, die auf einem Versteifungsrahmen aufliegt, wobei die Abkantungen den Versteifungsrahmen übergreifen und die Spannbänder die aus Luftverteiler-Folie, Blechplatte und Versteifungsrahmen bestehende Einheit umspannen.

Vorteilhaft ist die Blechplatte aus ihrer Ebene heraus elastisch verformbar.

Die Befestigung der Luftverteiler-Folie an der Blechplatte erfolgt dabei zweckmäßig so, daß die abgekanteten Ränder der Blechplatte von einer elastischen Schicht, insbesondere einem Klebeband umgeben sind, worüber die Luftverteiler-Folie gezogen ist, die durch aufgeschobene U-Profile festgeklemmt ist.

Bei der Herstellung einer erfindungsgemäßen Einrichtung wird, nach einem weiteren Merkmal der Erfindung, auf die Ränder einer rechteckigen Blechplatte einseitig ein Klebeband mit überstehenden Rändern aufgebracht, anschließend die Luftverteiler-Folie auf die Blechplatte aufgelegt und an den Rändern mit der Blechplatte bzw. dem Klebeband verklebt, worauf die Luftverteiler-Folie samt dem überstehenden Klebeband um die Blechplatte gefaltet und an deren Unterseite angeklebt wird, anschließend die U-Profile über die Ränder geschoben und verpreßt werden, worauf die Abkantungen hergestellt und schließlich die solcherart hergestellte Einheit auf den vorgefertigten Versteifungsrahmen aufgelegt und mittels der mit den Niederhaltern versehenen Spannbänder mit dem Versteifungsrahmen verbunden wird.

Nachstehend ist die Erfindung anhand eines in den Zeichnungen dargestellten Ausführungsbeispieles näher beschrieben, ohne jedoch auf dieses Beispiel beschränkt zu sein. Dabei zeigen: Fig. 1 in schaubildlicher Ansicht schematisch eine erfindungsgemäße Einrichtung; Fig. 2 in vergrößertem Maßstab den Rand einer solchen Einrichtung; Fig. 3 die Blechplatte mit aufgeklebten Klebestreifen; die Fig. 4 und 5 jeweils einen Rand der Blechplatte mit dem Klebeband und der Folie, wobei in Fig. 5 das Aufschieben der U-Profile veranschaulicht wird; Fig. 6 den Vorgang beim Abkanten der Blechplatte samt Folie; Fig. 7 den Versteifungsrahmen und Fig. 8 das Umschlingen mit den Spannbändern, die durch Niederhalter verstärkt sind.

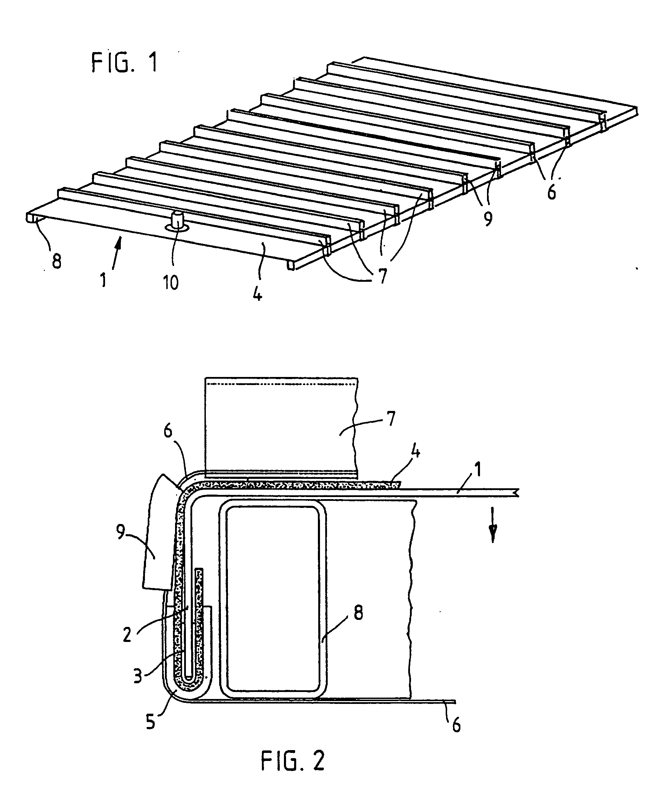

Gemäß den Fig. 1 und 2 weist eine Blechplatte 1 an ihren Rändern Abkantungen 2 auf. Die Ränder der Abkantungen 2 sind von einem Klebeband 3 umgeben. Eine LuftverteilerFolie 4 erstreckt sich über die gesamte Blechplatte 1 und wird an den Rändern durch U-Profile 5 festgeklemmt. Spannbänder 6, die an der Oberseite der Blechplatte 1 durch quadratische Formrohre 7 durchgesteckt sind, verbinden die eben beschriebenen Teile mit einem Versteifungsrahmen 8. Im Randbereich sind über die Spannbänder 6 Schutzschläuche 9 gezogen. Die Luftzufuhr zur gelochten Luftverteiler-Folie 4 erfolgt über einen Lufteintrittsstutzen 10.

Bei der Herstellung einer erfindungsgemäßen Einrichtung wird wie folgt vorgegangen:

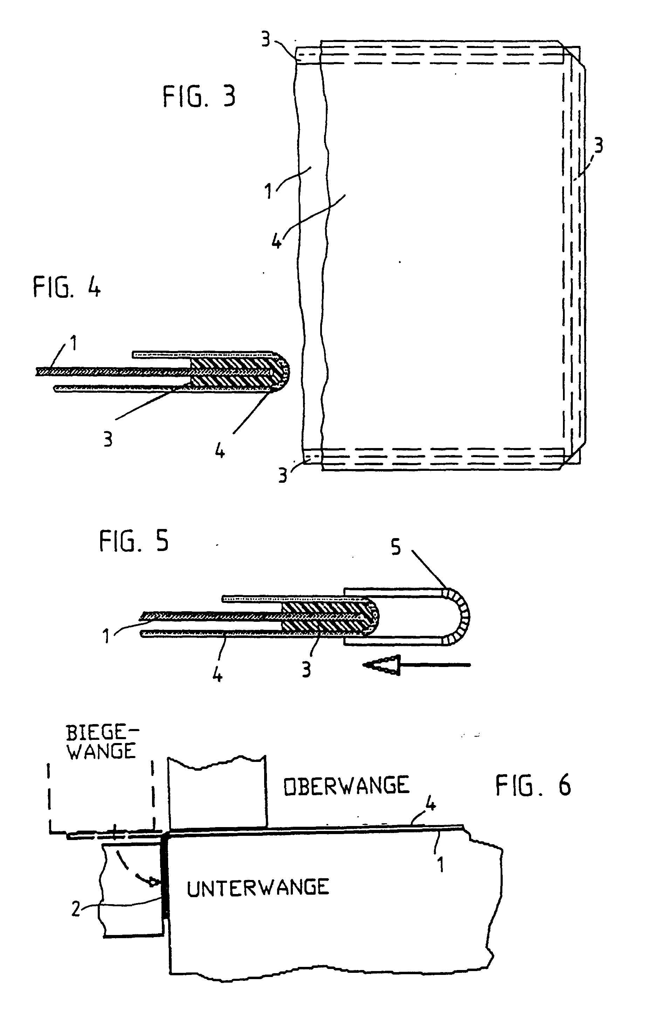

Auf eine Blechplatte, vorzugsweise aus Edelstahl, wird entlang deren Seitenkanten ein doppelseitig klebendes Klebeband 3 derart aufgebracht, daß jeweils eine halbe Bandbreite vorsteht. An der Längsseite der Blechplatte 1 reicht das Klebeband von einem Blechende bis zum anderen. In der Breite wird das Klebeband 3 stumpf eingepaßt (Fig. 3).

Nun wird die perforierte Luftverteiler-Folie faltenfrei und glatt auf die Blechplatte 1 aufgelegt und mittels der Klebebänder 3 verklebt. Die überstehenden Folienteile sollen dabei etwa gleich groß sein. Die Ecken der überstehenden Folie werden etwa unter 45 ° beschnitten. (Fig. 3)

Die Folie 4 wird nun samt dem überstehenden Klebeband 3 um die Blechplatte 1 gefaltet und auf der Blechunterseite angeklebt (Fig. 4).

Anschließend werden die U-Profile 5 vorerst an den Breitseiten, anschließend an den Längsseiten aufgeschoben (Fig. 5) und mittels Bördelrollen oder in einer Presse dicht aufgepresst.

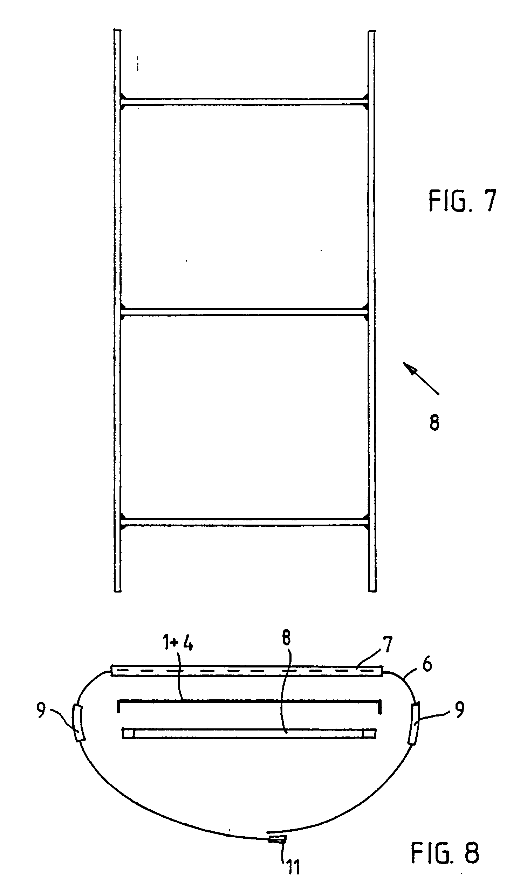

Die Blechplatte 1 wird nunmehr auf einer Blechabkantmaschine an ihren Längsrändern mit den Abkantungen 2 versehen (Fig. 6).

Ein aus Formrohren od. dgl. bestehender Versteifungsrahmen 8 entsprechend Fig. 7 wird gefertigt und auf diesen Versteifungsrahmen 8 die mit der Luftverteiler-Folie versehene Blechplatte 1 so gelegt, daß die Abkantungen 2 den Versteifungsrahmen 8 übergreifen. Spannbänder 6 werden durch die aus quadratischen Rohren bestehenden Niederhalter 7 gesteckt, mit den Schutzschläuchen 9 versehen, die Spannbänder in entsprechenden Abständen um die gesamte Einheit gelegt, angezogen und mittels Verschlußstücken 11 verbunden (Fig. 8).

Damit ist eine erfindungsgemäße Einrichtung fertiggestellt, kann in das Belüftungsbecken eingebracht und an die Luftleitung angeschlossen werden. Die Befestigung am Beckenboden kann, auch wenn es sich um einen schrägen Boden handelt, über herausragende Holme des Versteifungsrahmens 8 (nicht dargestellt) erfolgen.

Bei Zuführung von Luft kann sich die Blechplatte 1 aus ihrer Ebene heraus, das ist in Richtung des in Fig. 2 eingetragenen Pfeiles, elastisch verformen, so daß eine Art Polster entsteht.

## Patentansprüche

1. Einrichtung zum feinblasigen Belüften von Abwasser mittels unter dem Wasserspiegel angeordneter, an einer Luftverteilerleitung angeschlossener Luftverteiler, die eine gelochte Luftverteiler-Folie (4) aufweisen, die an ihren Randbereichen mit einem Formkörper (1) dichtend verbunden ist, wobei der Formkôrper (1) einen rechteckigen Grundriß und gerundete Längskanten aufweist und die Luftverteiler-Folie (4) um den Formkörper (1) herum gespannt sowie an der Unterseite mittels Klemmteilen (5) mit dem Formkörper (1) verbunden ist, ferner zur weiteren Befestigung und Abdichtung der Luftverteiler-Folie (4) Spannbänder (6) um den Formkörper (1) gelegt sind, **dadurch gekennzeichnet,** daß die Spannbänder (6) über die Länge des Formkörpers (1) verteilt angeordnet und an der Oberseite des Formkörpers (1) durch sich quer zum Formkörper (1) erstreckende Niederhalter (7) verstärkt sind.

2. Einrichtung nach Anspruch 1, **dadurch gekennzeichnet,** daß die Niederhalter als Rohre (7) ausgebildet sind, durch die die Spannbänder (6) gesteckt sind.

3. Einrichtung nach Anspruch 1 oder 2, **dadurch gekennzeichnet,** daß der Formkörper aus einer an ihren Rändern abgekanteten Blechplatte (1), vorzugsweise aus Edelstahl, besteht, die auf einem Versteifungsrahmen (8) aufliegt, wobei die Abkantungen (2) den Versteifungsrahmen (8) übergreifen und die Spannbänder (6) die aus Luftverteiler-Folie (4), Blechplatte (1) und Versteifungsrahmen (8) bestehende Einheit umspannen.

4. Einrichtung nach Anspruch 3, **dadurch gekennzeichnet,** daß die Blechplatte aus ihrer Ebene heraus elastisch verformbar ist.

5. Einrichtung nach Anspruch 3 oder 4, **dadurch gekennzeichnet,** daß die abgekanteten Ränder der Blechplatte (1) von einer elastischen Schicht, insbesondere einem Klebeband (3) umgeben sind, worüber die Luftverteiler-Folie (4) gezogen ist, die durch aufgeschobene U-Profile (5) festgeklemmt ist.

6. Verfahren zur Herstellung einer Einrichtung nach Anspruch 4 oder 5, **dadurch gekennzeichnet,** daß auf die Ränder einer rechteckigen Blechplatte (1) einseitig ein Klebeband (3) mit überstehenden Rändern aufgebracht, anschließend die Luftverteiler-Folie (4) auf die Blechplatte (1) aufgelegt und an den Rändern mit der Blechplatte (1) bzw. dem Klebeband (3) verklebt wird, worauf die Luftverteiler-Folie (4) samt dem überstehenden Klebeband (3) um die Blechplatte (1) gefaltet und an deren Unterseite angeklebt wird, anschließend die U-Profile (5) über die Ränder geschoben und verpreßt werden, worauf die Abkantungen (2) hergestellt und schließlich die solcherart hergestellte Einheit auf den vorgefertigten Versteifungsrahmen (8) aufgelegt und mittels der mit den Niederhaltern (7) versehenen Spannbänder (6) mit dem Versteifungsrahmen (8) verbunden wird.

## Claims

1. Apparatus for fine-bubble aeration of waste water by means of air distributors disposed beneath the water surface and connected to an air-distribution pipeline, and having a perforated air distribution film (4) which is connected in a sealed manner at its lateral areas to a moulded member (1), the moulded member (1) having a rectangular plane projection and rounded longitudinal edges, and the air distribution film (4) being stretched around the moulded member (1) and connected at the underside to the moulded member (1) by means of clamping members (5), there being passed around the moulded member (1) clamp bands (6) for further securement and sealing of the air distribution film (4), **characterised in** that the clamp bands (6) are distributed over the length of the moulded member (1) and are reinforced on the upper side of the moulded member (1) by retention means (7) extending transversely to the moulded member (1).

2. Apparatus according to claim 1, characterised in that the retention means are in the form of tubes (7) through which the clamp bands (6) are thrust.

3. Apparatus according to claim 1 or 2, characterised in that the moulded member comprises a sheet-metal plate (1), folded down at its edges and preferably made of stainless steel, and abutting on a reinforcing frame (8), the folded-down portions (2) engaging over the reinforcing frame (8), and the clamp bands (6) engaging around the unit comprising the air distribution film (4), the sheet-metal plate (1) and the reinforcing frame (8).

4. Apparatus according to claim 3, characterised in that the sheet-metal plate may be resiliently deformed out of its plane.

5. Apparatus according to claim 3 or 4, characterised in that the folded-down edges of the sheet-metal plate (1) are surrounded by a resilient layer, in particular an adhesive band (3), the air distribution film (4) being drawn over said adhesive band (3), and clamped securely by U-profiles (5) which are thrust on.

6. Method of manufacturing an apparatus according to claim 4 or 5, characterised in that an adhesive band (3) with projecting edges is applied to one side of the edges of a rectangular sheet-metal plate (1), the air distribution film (4) then being applied on to the sheet-metal plate (1) and glued at the edges to the sheet-metal plate (1) or the adhesive band (3), whereupon the air distribution film (4) together with the projecting adhesive band (3) is folded around the sheet-metal plate (1) and is glued to its underside; the U-profiles (5) are then pushed over the edges and compressed, whereupon the folded-down portions (2) are produced, and finally the unit produced in this fashion is applied to the previously-made reinforcing frame (8) and connected to the reinforcing frame (8) by means of the clamp bands (6) provided with the retention means (7).

## Revendications

1. Dispositif pour l'aération à fines bulles d'eau usée à l'aide de diffuseurs d'air positionnés sous niveau hydrostatique et raccordés à une conduite à diffusion d'eau, munis d'une feuille à diffusion d'eau (4) perforée, les bords de laquelle sont liés étanchement à un élément de moule (1) ; en ce dispositif, l'élément de moule (1) a un fond rectangulaire et des arêtes longitudinales arrondies et la feuille à diffusion d'air (4) est tendue autour de l'élément de moule (1) et attachée à la face inférieure à l'élément de moule (1) au moyen de pinces (5) ; en outre, pour mieux attacher et étancher la feuille à diffusion d'air (4), des bandes de serrage (6) sont tendues autour de l'élément de moule (1), **caractérisé en ce que** les bandes de serrage (6) sont distribuent sur la longueur de l'élément de moule (1) et sont renforcées à la partie supérieure de l'élément de moule (1) par des boucles de serrage (7) positionnées à travers de l'élément de moule (1).

2. Dispositif selon revendication 1, **caracterisé en ce que** les boucles de serrage sont développées en forme de tuyaux (7) dans lesquels les bandes de serrage (6) sont insérées.

3. Dispositif selon revendications 1 ou 2, **caracterisé en ce que** l'élément de moule est composé d'une plaque de tôle (1), de préférence en acier fin, bordée à vive arête, qui est placée sur un cadre de renfort (8) et les arêtes (2) de laquelle serrent le cadre de renfort (8), tandis que les bandes de serrage (6) sont tendues autour de l'ensemble composé de la feuille à diffusion d'air (4), la plaque de tôle (1) et le cadre de renfort (8).

4. Dispositif selon revendication 3, **caracterisé en ce que** la plaque de tôle est élastiquement déformable sur le plan horizontal.

5. Dispositif selon revendications 3 ou 4, **caracterisé en ce que** les bords en arête de la plaque de tôle (1) sont entourés d'une couche élastique, en particulier d'un ruban adhésif (3), au-dessus duquel la feuille à diffusion d'air (4) est tendue et calée par des profilés en U (5) attachés à l'ensemble.

6. Procédé de fabrication d'un dispositif selon revendications 4 ou 5, **caracterisé en ce qu'**un ruban adhésif (3) aux bords débordants est unilateralement attaché aux bords d'une plaque de tôle (1) rectangulaire, après quoi la feuille à diffusion d'air (4) est placée sur la plaque de tôle (1); en ceci les bords de la feuille à diffusion d'air (4) sont collés à la plaque de tôle (1) ou au ruban adhésif (3); subséquemment, la feuille à diffusion d'air (4) avec le ruban adhésif (3) débordant est pliée autour de la plaque de tôle (1) et collée au dessous de la plaque de tôle (1), après quoi les profilés en U (5) sont poussés sur les bords et comprimés, suivant lequel les arêtes (2) sont fabriquées, après quoi l'ensemble fabriqué de cette façon est finalement placé sur le cadre de renfort (8) préfabriqué et lié à ce cadre de renfort (8) à l'aide des bandes de serrage (6) munies de boucles de serrage (7).
